# EUROPEAN PATENT SPECIFICATION

(11) **EP 1 401 119 B1**
(45) Date of publication and mention of the grant of the patent: **15.02.2006**
(21) Application number: 02425565.5
(22) Date of filing: 20.09.2002
(51) Int. Cl.: H04B 7/005, H04L 1/00

(54) **Uplink power adjustment for a point-to-multipoint wireless communication system**
Einstellung der Leistung des Aufwärtskanals für ein drahtloses Punkt zu Multipunkt Kommunikationssystem
Ajustement de la puissance de la liaison montante dans un système de communication sans fils point-multipoint

(43) Date of publication of application: 24.03.2004
(73) Proprietor: Siemens Mobile Communications S.p.A., 20126 Milano (IT)
(72) Inventor: Cavalli, Giulio, 20159 Milano (IT); Santacesaria, Claudio, 20139 Milano (IT)
(74) Representative: Giustini, Delio

(56) References cited:
- WO-A-99/20016
- WO-A-99/21287
- US-A- 6 134 230
- US-A- 6 167 031

## Description

### FIELD OF THE INVENTION

The present invention relates to wireless communication systems and in particular to a point-to-multipoint wireless communication system using modulation-and-coding adaptation joined to uplink power adjustment with asymmetrical hysteresis between two known set of correction values.

### BACKGROUND ART

In point-to-multipoint radio systems a master station and one or several terminal stations are defined. The transmissions from the master station to one or more terminal stations are made on one channel, also called "downstream channel", typically with time division multiplexing approach (TDMA). The transmissions from the terminal stations to the master are made on another channel, also called "upstream channel". The upstream is divided from the downstream channel by time division duplexing (TDD) or by frequency division duplexing (FDD), that is the transmissions in upstream direction could be made either in different frequency channels, or in the same frequency channel but in different time-intervals.

The term "PHY mode" means the combination of modulation and FEC (Forwarding Error Correction). Each PHY mode is characterized by a different spectral efficiency and a different robustness against errors. Adaptive modulation or adaptive PHY mode is a key feature of point-to-multipoint radio systems. Master and terminal stations are equipped with means adapted to transmit and receive with PHY modes adaptively changed in the same frequency channel, when some external conditions which significantly change the quality of the signal take place. In the following reference is made to adaptive modulation but extension to adaptive PHY mode is trivial and has to be considered one of the applications of the present invention.

Known adaptive modulation switching algorithms and power control algorithms, also called ATPC algorithms, are dependent on each other. Adaptive modulation switching algorithms could have different procedures in downstream and upstream. Downstream is usually characterized by the fact of having the transmitted power constant for all the PHY modes. Upstream is characterized instead by a transmitted power, dependent on the PHY mode. Signals transmitted in uplink with different PHY modes are received at the master station with different power levels. The master station tends to receive the same power level from all the terminals, transmitting with the same PHY mode. ATPC algorithms are used to keep this level constant during the time and regardless the distance of the terminals. When the master commands to a terminal to change PHY mode, the transmitted power of this terminal has to be changed as well, according to the new PHY mode.

An adaptive modulation algorithm for the PHY mode switching is described in details in the patent application EP 1318617. The invention therein disclosed defines an asymmetric hysteresis with different power corrections when switching from a generic PHY mode A to a generic PHY mode B with respect to switching from B to A. This implementation in some cases can result in the best efficiency. In that case the terminal should receive a message that commands the PHY mode switching and a message that commands the power correction, since prior art gives the possibility to associate the nominal power gap between PHY modes and to automatically perform such correction when switching from A to B and from B to A, but the correction would be the same in both directions. The limit of prior art is the symmetry of such corrections based on nominal power gap between PHY modes. Therefore more efficient algorithms that require asymmetric transitions cannot rely on an automatic power correction and need two messages, one for PHY mode switching, and one for power correction. The major issue is that the two messages need strict synchronization which is not always practical to achieve.

The intemational patent application **WO 99/20016** discloses a method and apparatus for maintaining a predefined transmission quality in a wireless Metropolitan Area Network (MAN) including routers coupled to transceivers for interconnecting the routers via wireless link. For example, the strength of the received signal over a wireless communication link is periodically monitored for maintaining the strength within a predefined range by adjusting the transmission power. If the received signal strength remains below the predefined range despite the transmit power having been adjusted to a maximum allowable level, and if the error rate approaches a predefined limit, one or more techniques are selectively employed, singly or in combination, to reduce the error rate while maintaining a sufficient high network throughput. The adaptive techniques include changing the data rate, modulation level, error correction coding, and spectrum spreading. For example, the current transmission can be either switched to a more robust and less efficient PHY mode (4QAM, 50 Mb/s) or to a less robust and more efficient one (16QAM, 100 Mb/s), depending on the received signal level (RSL) is being respectively decreasing or increasing towards relevant switching thresholds. A warning RSL is placed between two RSL switching thresholds towards adjacent PHY modes for the aim of introducing hysteresis when going back and forth these modes. Each router adjusts the value of the transmission power before changing the PHY mode. The adjusted values are determined through an empirical criterion based on the saturation level of the power amplifier in conjunction with different tolerances to the AM-AM and AM-PM distortions of the specific mode. Although this criterion avoids the transmission of power setting messages between the routers every time a PHY mode is changed, it is too rigid because manufacturers are tied to use power amplifiers with exactly the same gain curves.

### OBJECT OF THE INVENTION

The main object of the present invention is to overcome the limit of the prior art and indicate a wireless communication system of the point to multipoint type whose terminals are allowed to automatically correct the transmitted power during PHY mode switching, without additional messages from the master to the terminals to explicitly command the power adjustment.

### SUMMARY AND ADVANTAGES OF THE INVENTION

Object of the present invention is therefore a wireless communication system of the point to multipoint type, as disclosed in claim 1. The system of the invention includes a master stations and one or more terminal stations. The master station includes means adapted to generate and transmit a broadcast message towards all the terminal stations to inform the same about the power adjustments to be performed during PHY mode switching. In particular two set of power corrections to be communicated to terminals are defined: one set informs the terminals on the power corrections when the PHY mode is downgraded, that is a switching towards a more robust and less efficient PHY mode is performed; the second set informs the terminals about power corrections when the PHY mode is upgraded to a more efficient and less robust one. Depending on the direction of the switching, upgrade or downgrade of the PHY mode, and depending on the new PHY mode the addressed terminal chooses the right value of power adjustment to correct the transmitted power.

The message with the two set of power adjustments is broadcast to the terminals periodically, or when the master decides it's useful; no other messages are required in order to adjust the power during the switching of PHY modes. That is the terminals know in advance the power adjustment to apply to the transmitted power when they are instructed to perform the PHY mode switching.

The two set of power adjustments allows having an asymmetric power adjustment, giving a very large flexibility in the definition and application of efficient PHY mode switching and ATPC algorithms.

### BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:
- **fig.1** shows the simplifed structure of a downlink message exploited by the system of the present invention for adjusting the transmission power of the terminals during upgrading or downgrading the PHY modes;
- **fig.2** shows a diagram of the transmitted and received power during downgrading the PHY modes;
- **fig.3** shows a diagram of the transmitted and received power during upgrading the PHY modes.

### DETAILED DESCRIPTION OF THE PREFERRED EMBODIMENT

The preferred embodiment of the present invention concerns a point-to-multipoint wireless communication system including at least a master station connected to several terminal stations. The implemented modalities for two-way access and duplexing have been already disclosed in the introduction. The master and terminal stations are equipped with known means adapted to transmit and receive with a combination of modulation and error correction code (PHY mode) adaptively changed (in the same frequency channel) when some external conditions which significantly change the quality of the signal take place. More in particular the following means are included:
- block coding/decoding,
- interleaving/deinterleaving,
- burst formatting/unformatting,
- ciphering/deciphering,
- digitally modulating/demodulating,
- frequency up/down converting,
- RF power amplifying, and
- measuring the main quality parameters of the received signal, such as: signal power to noise ratio, signal power to interference plus noise ratio, bit error rate, block error rate, etc.

Moreover the master station includes means adapted to generate a message broadcast to the terminals to inform them about the power adjustments to be performed during a PHY mode switching. These means avail of a microprocessor already used for assembling other protocol messages. For duality, each terminal station includes means adapted to receive and use said adjustment values as specified in the following.

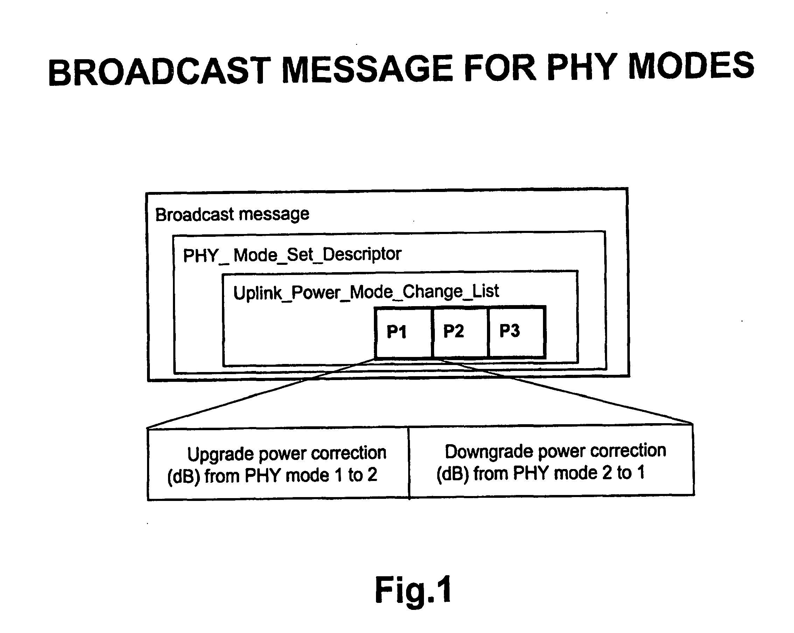

**Fig.1** shows the structure of a message generated inside the master station and broadcast towards all the terminal stations for adjusting the power transmitted from the various terminal stations during upgrading or downgrading the PHY modes.

With reference to **fig.1** the whole information regarding the channel operation parameters of the broadcast message is shown. The message indudes one field (PHY_Mode_Set_Descriptor), including a list (Uplink_Powe_Mode_Change_List) of power correction couples P1, P2, P3, one for each couple of adjacent PHY modes; each power correction couple includes a correction (adjustment) value for upgrading from the more robust against errors to the more spectrally efficient PHY mode, and another correction for downgrading from the more spectrally efficient PHY mode to the more robust against errors. Periodically, or when the master decides it's useful, the message of **fig.1** with the two set of power adjustments is sent to the terminals.

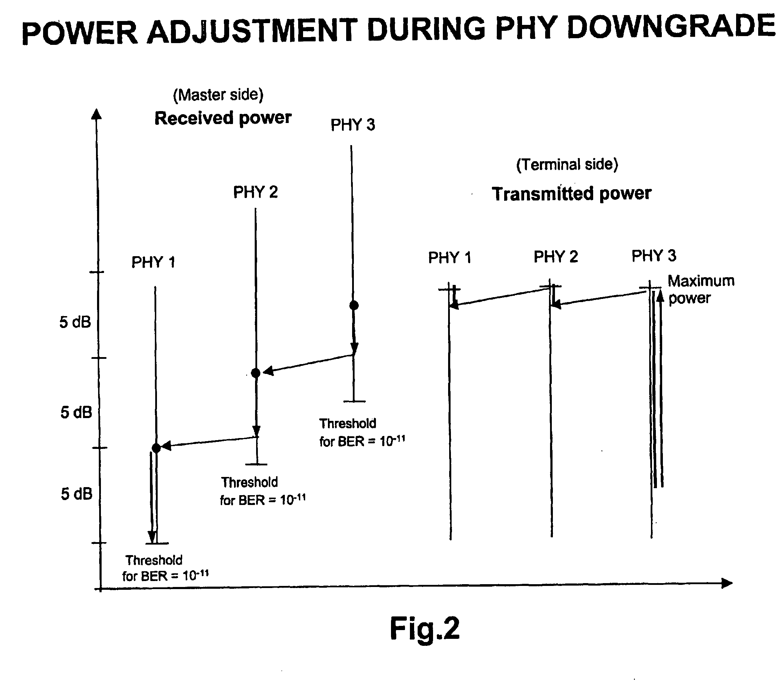

**Fig.2** shows the use of the message of fig.1 for downgrading of the PHY modes. With reference to **fig.2** the received level is let to go down until it reaches a predefined level; for example 3 dB below the working point of current PHY mode and 1 dB above the working point of the next more robust PHY mode. Then the master station commands to the terminal to perform the switching from PHY mode 3 to PHY mode 2. The terminal that performs the switching regulates automatically the transmitted power choosing the right value from the downgrading set of power adjustments that in this example would be set to 1 dB, so that immediately after the command the terminal starts transmitting with the nominal power level of the new PHY mode.

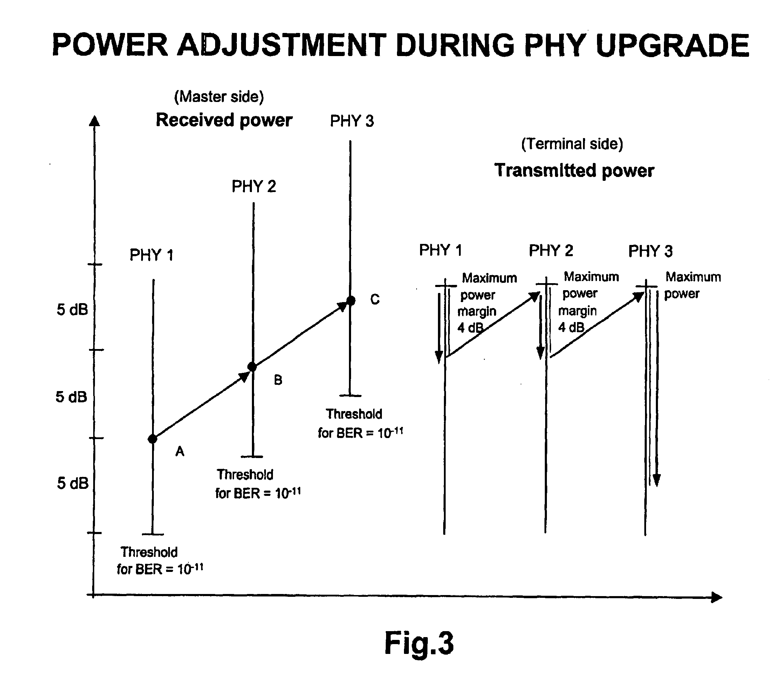

**Fig.3** shows the use of the message of fig.1 for upgrading of the PHY modes. With reference to **fig.3** the received level is kept in the working point until the terminal stations have sufficient power to switch to the next more efficient PHY mode. Then the master station commands to the terminal to perform the switching, for example, from PHY mode 2 to PHY mode 3. The terminal that performs the switching regulates automatically the transmitted power choosing the right value from the upgrading set of the power adjustments. In this example the power correction would be 4 dB, exactly the nominal power difference between the two PHY modes and a different value from the previously described downgrade case.

Considering now both the **Figures 2** and **3**, the two above mentioned values of power adjustments, from PHY mode 3 to PHY mode 2, and from PHY mode 2 to PHY mode 3, are different each other and the message of fig.1 carries both the values, differently from the teaching of the prior art. If the switching is done from a more robust PHY mode to a more efficient PHY mode, the terminal chooses the correct value of power correction in the set for upgrading the PHY mode within the message of the present invention. Otherwise, if the switching is done from a more efficient to a more robust PHY mode, the terminal chooses a value from the downgrading PHY mode power correction set. Any time the master commands the terminal to change PHY mode, the said terminal performs the switching and at the same time it can change the transmitted power automatically by the amount indicated by the master station. The letter is therefore in total control and can implement any efficient and optimized ATPC and PHY mode switching algorithm without additional ATPC messages.

In conclusion, with the message described in the present invention it's possible to communicate, in a very efficient and robust way, to the terminals (or to a subset of the terminals) the right values of the power adjustments, with separate values for downgrading and upgrading the PHY mode.

While a particular embodiment of the present invention, applied to point-to-multipoint radio system, has been shown and described, it should be understood that the present invention is not limited thereto since other embodiments may be made by those skilled in the art without departing from the ambit of the following claims.

## Claims

1. A wireless communication system comprising at least one station called master, and one or several terminal stations, both containing first means for transmitting and receiving with different PHY modes, by PHY modes meaning the combination of modulation and error correction coding, said master being equipped with second means adapted to instruct said terminals to change the PHY mode of the transmission, said terminals being equipped with second means adapted to change the PHY mode of the transmission and to regulate the transmission power, **characterized in that**:
- said master's second means are also adapted to generate a message containing transmission power correction values for each couple of PHY modes next to each other in a list;
- said master's first means are also adapted to broadcast said message towards the terminal stations;
- said terminal's second means are also adapted to select either one or the other received value of transmission power correction depending on the current PHY mode and the direction of the change either towards more robust or towards more efficient PHY mode; and
- said terminal's second means are also adapted to apply the selected value of transmission power correction during PHY mode switching, without additional messages from the master to the terminals to explicitly command the power adjustment.

2. The system of the claim 1, **characterized in that** one of said power correction values is used for power corrections during the upgrading of the PHY modes from the more robust against errors to the more spectrally efficient.

3. The system of the claim 1, **characterized in that** one of said power correction values is used for power corrections during the downgrading of the PHY modes from the more spectrally efficient to the more robust against errors.

4. The system of one of the previous claims, **characterized in that** the master station broadcast said message towards all the terminal stations periodically, or when decides it's useful.

5. The system of claim 1 **characterized in that** said master's first means are adapted to broadcast said message towards all the terminal stations.

6. The system of claim 1 **characterized in that** said master's first means are adapted to broadcast said message towards a subset of terminal stations.

## Patentansprüche

1. Drahtloses Kommunikationssystem, welches mindestens eine Station umfasst, die als Master-Station bezeichnet wird, sowie eine oder mehrere Terminal-Station(en), wobei beide erste Mittel zum Senden und Empfangen mit verschiedenen PHY-Modi beinhalten, wobei PHY-Modi die Kombination von Modulation und Fehlerkorrekturcodierung meint, und wobei die besagte Master-Station mit zweiten Mitteln ausgestattet ist, die dafür ausgelegt sind, die besagten Terminal-Stationen anzuweisen, den PHY-Modus für das Senden zu ändern, wobei die besagten Terminal-Stationen mit zweiten Mitteln ausgestattet sind, die dafür ausgelegt sind, den PHY-Modus für das Senden zu ändern und die sendeleistung zu regulieren, **dadurch gekennzeichnet, dass**:
- die besagten zweiten Mittel der Master-Station ebenfalls dafür geeignet sind, eine Nachricht zu generieren, die Werte für die Korrektur der Sendeleistung für jedes Paar nebeneinander liegender PHY-Modi in einer Liste enthält;
- die besagten ersten Mittel der Master-Station ebenfalls dafür geeignet sind, die besagte Nachricht an die Terminal-Stationen rundzusenden;
- die besagten zweiten Mittel der Terminal-Stationen ebenfalls dafür geeignet sind, entweder den einen oder den anderen empfangenen Wert zur Sendeleistungskorrektur auszuwählen, in Abhängigkeit von dem aktuellen PHY-Modus und von der Richtung der Umschaltung entweder in einen robusteren oder in einen frequenzökonomischeren PHY-Modus; und
- die besagten zweiten Mittel der Terminal-Stationen ebenfalls dafür geeignet sind, den ausgewählten Wert für die Korrektur der Sendeleistung während der Umschaltung des PHY-Modus anzuwenden, ohne dass zusätzliche Nachrichten von der Master-Station an die Terminal-Stationen erforderlich sind, um die Leistungseinstellung ausdrücklich anzuordnen.

2. System gemäß Anspruch 1, **dadurch gekennzeichnet, dass** einer der besagten Sendeleistungs-Korrekturwerte für die Korrektur der Sendeleistung während der Hochstufung des PHY-Modus von dem gegen Fehler robusteren in den frequenzökonomischeren Modus angewendet wird.

3. System gemäß Anspruch 1, **dadurch gekennzeichnet, dass** einer der besagten Sendeleistungs-Korrekturwerte für die Korrektur der Sendeleistung während der Herunterstufung des PHY-Modus von dem frequenzökonomischeren in den gegen Fehler robusteren Modus angewendet wird.

4. System gemäß einem der vorstehenden Ansprüche, **dadurch gekennzeichnet, dass** die Master-Station die besagte Nachricht in regelmäßigen Abständen oder wenn sie entscheidet, das dies erforderlich ist, an alle Terminal-Stationen rundeendet.

5. System gemäß Anspruch 1, **dadurch gekennzeichnet, dass** die besagten ersten Mittel der Master-Station dafür ausgelegt sind, die besagte Nachricht an alle Terminal-Stationen rundzusenden.

6. System gemäß Anspruch 1, **dadurch gekennzeichnet, dass** die besagten ersten Mittel der Master-Station dafür ausgelegt sind, die besagte Nachricht an eine Teilgruppe der Terminal-Stationen rundzusenden.

## Revendications

1. Système de communication sans fil comprenant au moins une station dite maîtresse et une ou plusieurs stations formant terminaux, toutes contenant des premiers moyens pour émettre et recevoir selon différents modes PHY, modes PHY désignant la combinaison de la modulation et du codage de correction d'erreurs, ladite maîtresse étant équipée de seconds moyens adaptés pour donner aux terminaux l'instruction de changer le mode PHY de l'émission, lesdits terminaux étant équipés de seconds moyens adaptés pour changer le mode PHY de l'émission et pour réguler la puissance d'émission,
**caractérisé en ce que :**
- les seconds moyens de ladite maîtresse sont aussi adaptés pour produire un message contenant les valeurs de correction de puissance d'émission pour chaque couple de modes PHY voisins l'un de l'autre dans une liste ;
- les premiers moyens de ladite maîtresse sont aussi adaptés pour diffuser ledit message aux stations formant terminaux ;
- les seconds moyens desdits terminaux sont aussi adaptés pour sélectionner soit l'une soit l'autre des valeurs reçues de correction de puissance émise en fonction du mode PHY actif et du sens du changement vers un mode PHY soit plus robuste, soit plus efficient, et
- les seconds moyens desdits terminaux sont aussi adaptés pour appliquer la valeur sélectionnée de correction de la puissance émise durant la commutation du mode PHY, sans messages additionnels de la maîtresse aux terminaux pour ordonner explicitement l'ajustement de puissance.

2. Système selon la revendication 1, **caractérisé en ce que** l'une desdites valeurs de correction de puissance est utilisée pour les corrections de puissance durant le basculement des modes PHY vers le haut du mode plus robuste par rapport aux erreurs au mode plus efficient sur le plan spectral.

3. Système selon la revendication 1, **caractérisé en ce que** l'une des valeurs de correction de puissance est utilisée pour les corrections de puissance durant le basculement des modes PHY vers le bas du mode le plus efficient sur le plan spectral au mode le plus robuste par rapport aux erreurs.

4. Système selon l'une quelconque des revendications précédentes, **caractérisé en ce que** la station maîtresse diffuse ledit message à toutes les stations formant terminaux périodiquement ou lorsqu'elle décide que c'est utile.

5. Système selon la revendication 1, **caractérisé en ce que** les premiers moyens de ladite maîtresse sont adaptés pour diffuser ledit message à toutes les stations formant terminaux.

6. Système selon la revendication 1, **caractérisé en ce que** les premiers moyens de ladite maîtresse sont adaptés pour diffuser ledit message à un sous-ensemble de stations formant terminaux.
